# EUROPÄISCHE PATENTANMELDUNG

(11) **EP 3 719 968 A1**
(43) Veröffentlichungstag der Anmeldung: **07.10.2020**
(21) Anmeldenummer: 19167293.0
(22) Anmeldetag: 04.04.2019
(51) Int. Cl.: H02K 5/18, H02K 9/06, H02K 9/14, H02K 11/33

(54) **ANTRIEBSEINHEIT MIT GEHÄUSE FÜR EIN ELEKTRONISCHES ANBAUTEIL**

(71) Anmelder: Siemens Aktiengesellschaft, 80333 München (DE)
(72) Erfinder: Deeg, Christian, 90518 Altdorf (DE); Maidorn, Mischa, 90547 Stein (DE); Tischmacher, Hans, 91207 Lauf (DE); Tsotoulidis, Savvas, 90491 Nürnberg (DE)

(57) **Zusammenfassung**

Die Erfindung betrifft einen Antrieb (1) mit
- zumindest einer dynamoelektrischen rotatorischen Maschine (2),
- zumindest einem elektronischen Anbauteil (13),
- zumindest einer Kühleinheit (15),
- wobei diese Komponenten des Antriebs (1) axial hintereinander angeordnet sind, derart, dass das elektronische Anbauteil (13) axial zwischen dynamoelektrischen rotatorischen Maschine (2) und der Kühleinheit (15) angeordnet ist
- wobei das elektronische Anbauteil (13) zumindest abschnittsweise von einer thermisch leitfähigen Abdeckung (20) umgeben ist.

## Beschreibung

Die Erfindung betrifft eine Antriebseinheit mit einer dynamoelektrischen Maschine zumindest einem elektronischen Anbauteil und zumindest einer Kühleinheit, die axial hintereinander angeordnet sind.

Derartige Antriebseinheiten sind beispielsweise aus der DE 198 12 729 A1 bekannt. Die Erfindung beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Die Erfindung beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe. Ausgehend davon liegt der Erfindung die Aufgabe zugrunde, eine kompakte Antriebseinheit zu schaffen, die eine ausreichende Kühlung der Antriebseinheit gewährleistet.

Die Lösung der gestellten Aufgabe gelingt durch einen Antrieb mit
- zumindest einer dynamoelektrischen rotatorischen Maschine,
- zumindest einem elektronischen Anbauteil,
- zumindest einer Kühleinheit,
- wobei diese Komponenten des Antriebs axial hintereinander angeordnet sind, derart, dass das elektronische Anbauteil axial zwischen dynamoelektrischen rotatorischen Maschine und der Kühleinheit angeordnet ist
- wobei das elektronische Anbauteil zumindest abschnittsweise von einer thermisch leitfähigen Abdeckung umgeben ist.

Damit ergibt sich ein sehr kompakter und leistungsfähiger Antrieb, dessen Komponenten, insbesondere das elektronische Anbauteil als auch die dynamoelektrische rotatorische Maschine kühlt. Über die Abdeckung des elektronischen Anbauteils werden dessen Elemente, wie Leistungshalbleiter, Steuer- und Regeleinheiten gekühlt. Bei der dynamoelektrischen rotatorischen Maschine, werden insbesondere über eine Welle und den an einem Gehäuse der dynamoelektrischen rotatorischen Maschine entlang geführten Kühlluftstrom Stator und Rotor gekühlt.

Die Abdeckung ist aus vergleichsweise thermisch gut leitfähigem Material, wie Aluminium oder Aluminiumlegierungen.

Die Abdeckung ist im Wesentlichen topfförmig ausgestaltet. Der Topfboden weist eine Aussparung auf, durch die die Welle ragt, die u.a. die Antriebswelle der Kühleinheit, insbesondere eines Lüfters ist. Die Topfwand weist an ihrer Außenseite axial erstreckende Rippen auf. Die Innenseite der topfförmig ausgeführten Abdeckung ist polygonal ausgeführt, um Steller- oder Umrichterkomponenten direkt an der Innenseite der Abdeckung anordnen zu können. Damit wird eine vergleichsweise thermisch gute Anbindung dieser Elemente gewährleistet.

Der Rotor wird u.a. auch über die Welle gekühlt. Außerdem wird Wärme des Rotors auch an den Innenraum der dynamoelektrischen rotatorischen Maschine abgegeben, so dass sich die Lagerschilde, Lager und Gehäuse dadurch ebenfalls erwärmen können. Dieser Wärmeeintrag wird durch die das Gehäuse und die Lagerschilde umströmende Luft, insbesondere durch die adaptierbare Kühleinheit, z.B. den Lüfter abgeführt.

Der Stator erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Mantel des Gehäuses eingeschrumpft, um einen vergleichsweise guten Wärmeübergang vom Blechpaket des Stators auf das Gehäuse und die Gehäuserippen zu erhalten.

Die insbesondere als Eigenlüfter ausgeführte Kühleinheit generiert im Betrieb der dynamoelektrischen rotatorischen Maschine einen Kühlluftstrom, der zunächst radial entlang dem Topfboden der Abdeckung und danach die äußere Topfwand geführt ist. Eine Lüfterhaube, die sich axial Richtung AS-Lager erstreckt, führt den Kühlluftstrom auch entlang der Kühlrippen von Abdeckung und Gehäuse der dynamoelektrischen rotatorischen Maschine.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs,
- FIG 2: Antrieb mit einer Abdeckung der elektronischen Anbauteile,
- FIG 3,4: Abdeckung.

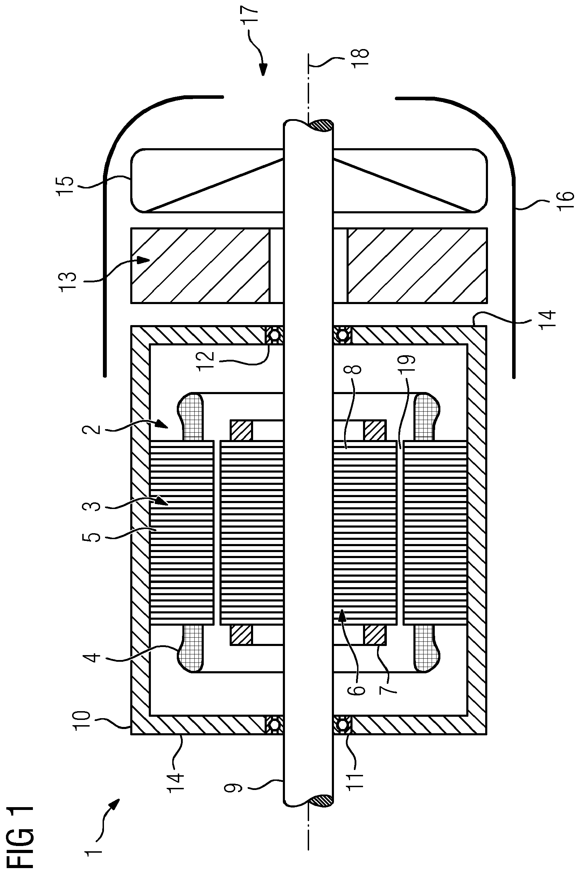

FIG 1 zeigt einen Antrieb 1 mit einer dynamoelektrischen rotatorischen Maschine 2, die einen Stator 3 aufweist, der ein Blechpaket 5 hat. In dem Blechpaket 5 des Stators 3 ist einem Luftspalt 19 zugewandt, ein Wicklungssystem angeordnet, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle um eine Achse 18 führt. Die Welle ist in zwei Lagern drehfest gehalten, einem AS-Lager 11 und einem BS-Lager 12.

Die dynamoelektrische rotatorische Maschine 2 ist von einem Gehäuse 10 umgeben, das an den Stirnseiten von Lagerschilden 14 begrenzt ist. Axial von der BS-Lager-Seite beabstandet befindet sich ein elektronisches Anbauteil 13, das zumindest Elemente eines Umrichters oder Stellers beinhaltet. Das elektronische Anbauteil 13 ist ortsfest und nicht mit der Welle drehfest verbunden. Axial daran schließt sich ein Lüfter 15 an, der wiederum drehfest mit der Welle 9 verbunden ist und einen Kühlluftstrom generiert, der durch eine Lüfterhaube 16 geführt wird. Der Luftstrom wird über eine Ansaugöffnung 17 dem Lüfter 15 zugeführt.

Bei dem Antrieb 1, insbesondere zwischen dem elektronischen Anbauteil 13 und dem zugewandten Lagerschild 14 tritt im Betrieb des Antriebs 1 ein Wärmestau ein. Der Wärmeeintrag erfolgt dabei auf das elektronische Anbauteil 13 von beiden axialen Seiten. So führt Verlustwärme aus dem Umrichter oder Steller, als auch Wärme aus der Maschine über das Lagerschild zu diesem Wärmestau zwischen den einzelnen Komponenten. Die Wärme aus der Maschine 2 setzt sich u.a. aus der Verlustwärme von Stator 3 und Rotor 6 zusammen. Diese heizen zusätzlich die benachbarten Lager auf, was den Schmierstoff der Lager beeinträchtigt und kürzere Nachschmierfristen erfordern würde.

Die Wärme wird auch über die Welle 9, insbesondere aus dem Rotor 6 der dynamoelektrischen rotatorischen Maschine 2 transportiert und dem Lüfter 15 zugeführt, der u.a. als Wärmeabgabeelement fungiert. Der Lüfter 15 erzeugt im Betrieb der dynamoelektrischen rotatorischen Maschine auch einen Kühlluftstrom.

Das elektronische Anbauteil 13 ist von der Welle 9 beabstandet und ortsfest und über mechanische Verbindungen am benachbarten Lagerschild fixiert. Elektrische Leitungen, wie Versorgungsleitungen und/der Sensorleitungen aus und in das Gehäuse 10 der dynamoelektrischen rotatorischen Maschine 2 erfolgen unter Einhaltung der jeweiligen Schutzart über das Lagerschild und/oder das Gehäuse 10 und/oder einen Klemmkasten am Gehäuse 10.

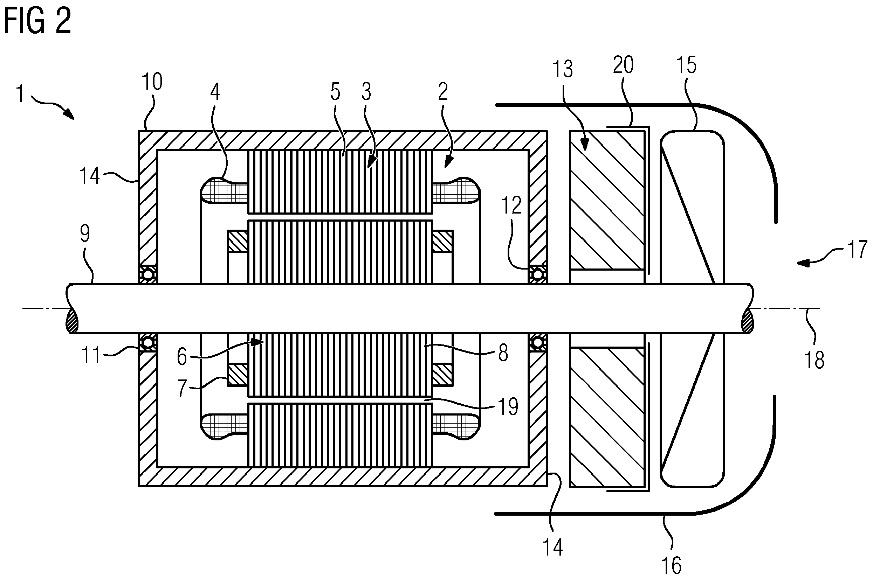

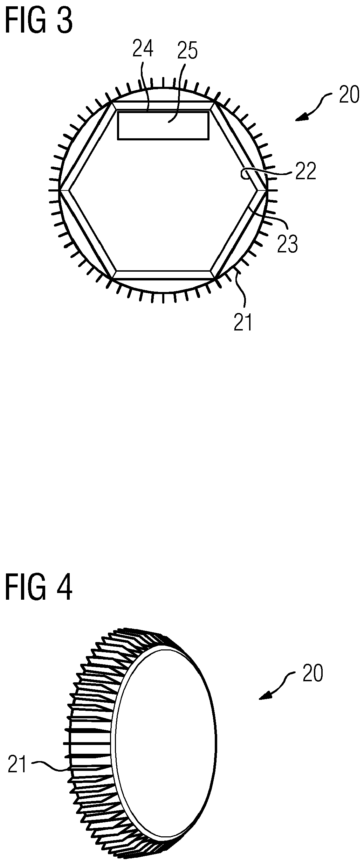

FIG 2 zeigt in einer Anordnung gemäß FIG 1 die Abdeckung 20, die auf der dem Lüfter 15 zugewandten Seite des elektronischen Anbauteils 13 angeordnet ist. Die Abdeckung 20 ist aus thermisch gut leitfähigem Material, so dass die Verlustwärme der Steller- und Umrichterkomponenten aus dem elektronischen Anbauteil 13 an den Kühlluftstrom abgebbar ist. Zusätzliche Rippen 21, wie in den Figuren 3 und 4 dargestellt, erhöhen den Wärmeabgabeeffekt, insbesondere wenn, wie in FIG 1 und 2 dargestellt, eine Lüfterhaube 16 den Kühlluftstrom leitet.

Eine polygonale Innenkontur 22 auf der Innenseite der Abdeckung 20, also der Innenseite der topfähnlich ausgebildeten Abdeckung 20 schafft plane Flächen 23, die das Anbringen der Steller- und Umrichterkomponenten 25 des elektronischen Anbauteils 13 erleichtern, und somit gleichzeitig einen guten Wärmeübergang der thermisch leitenden Verbindung 24 schaffen.

Vorteilhafterweise sind die Rippen 22 und die Rippen des Gehäuses 10 der dynamoelektrischen rotatorischen Maschine 2 in axialer Flucht, um somit dem Kühlluftstrom möglichst wenig Strömungswiderstand entgegenzusetzen.

Durch die Abdeckung 20 kann ebenfalls durch dementsprechende Abdichtung zu einer Grundplatte des elektronischen Anbauteil 13 die erforderliche Schutzart eingehalten werden.

Des Weiteren dient die Abdeckung 20 auch als Wärmepuffer für schwankende Betriebszustände des Antriebs 1.

Außerdem dient die Abdeckung als Montagehilfe, da die einzelnen Elemente des elektronischen Anbauteils 13 bereits vorab in der Abdeckung 20 positioniert werden können. Durch Stecckontakte kann dabei dann die weitere elektrische Kontaktierung mit der Maschine 2 erfolgen.

Der Antrieb 1 bzw. die Antriebseinheit ist grundsätzlich kompakt aufgebaut. Dabei können die vorab beschriebenen und die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung des elektronisches Anbauteil 13 angeordnet, die abschnittsweise von der Abdeckung 20 gebildet wird.

Eine Kühlung des Antriebs 1 und seiner jeweiligen Abschnitte/Teile/Komponenten erfolgt durch eine oder mehrere Kühleinheiten, die als Flüssigkeitskühlung (Kühlmantel an Gehäuseanordnung und/oder am Gehäuse 10 der dynamoelektrischen rotatorischen Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung liegt, so dass eine axiale Reihenfolge von Lüfter 15, Gehäuseanordnung des elektronischen Anbauteils 13 und dynamoelektrischer rotatorischer Maschine 2 vorliegt.

Der Lüfter 15 kann auch als eine Lüftereinheit aus einem oder mehreren Eigen- und/oder auch Fremdlüftern aufgebaut sein, die auch zumindest teilweise an oder in einer Lüfterhaube 16 integriert sein können.

Zur Verbesserung des Kühleffekts sind oberflächenvergrößernde Maßnahmen an der Gehäuseanordnung und/oder dem Gehäuse 10 der dynamoelektrischen rotatorischen Maschine 2 vorgesehen. Dabei sind dort Rippen 21, Noppen oder zusätzliche Wärmekapazitäten in Form von Gehäuseerweiterung vorgesehen, die Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild 14 und der Gehäuseanordnung Kühlkanäle geschaffen, die durch dementsprechende Gestaltung und einem Hauptluftstrom einen zur Kühlung betragenden Venturieffekt in den Aussparungen erzielen.

Die Gehäuseanordnung kann dabei auch trichterförmig ausgebildet, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann. Die Abdeckung 20 bildet dabei dann einen Teil des Trichters, der sich in Richtung Lüfter 15 verjüngt.

Um die Oberfläche der Gehäuseanordnung, insbesondere der Abdeckung 20 zu vergrößern weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe erfüllt. Damit können axial kürzere Lüfter 15 eingesetzt werden, um so eine kompaktere Bauweise des Antriebs zu erhalten.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf führen. Der Innenlüfter ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten und dementsprechend angeordneten Magneten innerhalb des elektronischen Anbauteils 13 beispielsweise auf einer Nabe des Innenlüfters.

Alternativ kann der Innenlüfter seine Antriebsenergie auch dem Drehfeld der dynamoelektrischen rotatorischen Maschine 2, insbesondere dessen Oberschwingungen entnehmen.

Die elektrische Antriebsenergie des Innenlüfter kann auch direkt den Steller- oder Umrichterkomponenten innerhalb des elektronischen Anbauteils 13 entnommen werden.

Die Innenlüfter sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch den Lüfter 15 und den Innenlüfter kann auch zumindest zeitweise auch ein Redundanzbetrieb des Antriebs 1 aufrechterhalten werden, sofern einer der beiden Lüfter ausfallen sollte.

Zur Regelung kann der Antrieb 1 auch eine Regeleinheit aufweisen, die Daten unterschiedlichster Sensoren u.a. Temperatursensoren, Schwingungssensoren, Schallsensoren erhält. Die Temperatursensoren sind bei diesem Antrieb 1 an den relevanten Einbauorten angeordnet. So sind Temperatursensoren für die Außenluft, für das elektronische Anbauteil 13, der Leistungshalbleiter im elektronischen Anbauteil 13, für das oder die Lager 11, 12, für das Wicklungssystem und/oder den Wickelkopf 4, für den Innenraum der Maschine 2, als auch für das Gehäuse 10 und die Umgebung vorgesehen.

Sensoren, die in dem Antrieb 1, also der Maschine 2 und/oder dem elektronischen. Anbauteil 13 vorgesehen werden, sind kabelgebunden oder kabellos mit einer Regeleinheit verbunden, die in der elektronischen Anbaueinheit 13 oder am Gehäuse 10 der Maschine 2, insbesondere in einem Klemmenkasten oder in der Maschine 2 angeordnet ist.

Schwingungssensoren sind an der Welle 9 und oder Gehäuse 10 angebracht. Schallsensoren sind vor allem an schallemittierenden Quellen, wie z.B. Rippen oder Lagerschilden 14 vorgesehen. Des Weiteren sind Drehzahlsensoren zur Regelung des Antriebs 1 vorhanden.

Aus all diesen Daten regelt bzw. steuert die Regeleinheit u.a. die Drehzahl des oder der Fremdlüfters und/oder die Taktfrequenz des Umrichters. D.h., bei besonders hohen Außentemperaturen und/oder geringer Drehzahl der Welle 9 wird der Fremdlüfter temperaturabhängig zugeschaltet. Dabei ist auch die Drehzahl und damit der Volumenstrom des Fremdlüfters 26 steuer- bzw. regelbar.

Die Isttemperatur vorzugsweise des gesamtem Antriebs 1 wird dabei über einen oder mehrere der oben aufgeführten Temperatursensoren erfasst. Zusätzlich ist es möglich über ein Temperaturmodell die erfassten Werte zu verifizieren bzw. über vorgegebene in der Regeleinheit und/oder einer Cloud (beispielsweise über einen digitalen Zwilling) hinterlegte Algorithmen Temperaturen der Antriebskomponenten zu ermitteln, die nicht mit Sensoren versehen sind.

Damit ist ein energieeffizienter Betrieb des Antriebs 1 durchführbar und Wartungsintervalle des Antriebs 1 und dessen Komponenten sind außerdem besser planbar, wie z.B. Nachschmierfristen der Lager.

Die Sensoren sind dabei Schwingungssensoren, Temperatursensoren, Feuchtigkeitssensoren etc. Vorteilhafterweise übermitteln die Sensoren, ihre Daten leitungsgebunden oder über drahtlose Verbindungen an die Regeleinheit. Die Daten werden entweder durch direkten Kontakt oder optisch (beispielsweise Infrarot-Temperaturmessung) erfasst.

Die Regeleinheiten unterschiedlicher Antriebe 1 können auch über eine Cloud in Kontakt stehen und dabei vorgebbare Daten ihrer Antriebe austauschen.

Damit ergibt sich ein sehr kompakter und leistungsfähiger Antrieb 1, der aufgrund der Regeleinheit einen thermisch und/oder energieeffizienten Betrieb des Antriebs 1 gewährleistet. Dabei greift die Regeleinheit in die Taktfrequenz, den Aussteuergrad und/oder den Steuerwinkel eines Umrichters des elektronischen Anbauteils ein, ebenso wie beispielsweise in die Drehzahl eines Fremdlüfters. Damit ergibt sich im Hinblick auf thermische grenzen und/oder Energieeffizienz des Antriebs 1 eine optimale und aussteuerbare Verlustaufteilung zwischen den Komponenten der dynamoelektrischen Maschine 2 und den elektronischen Anbauteilen 13. Mittels der Kühleinheiten, zumindest einer Basiskühleinheit, einer Eigenbelüftung 15 und/oder einer Boosterkühleinheit, die insbesondere die Komponenten der dynamoelektrischen rotatorischen Maschine 2, wie Stator und Rotor, als auch die elektronischen Anbauteile 13, wie Leistungs- und Steuerelektronik, Regeleinheit etc. kühlt, wird somit auch ein thermisch steuer- bzw. regelbarer optimaler Betrieb des Antriebs 1 gewährleistet.

Beispielsweise führen bestimmte Einstellungen der Taktfrequenz des Umrichters zu geringeren Verlusten im Umrichter, aber erhöhen die Verluste in der dynamoelektrischen Maschine 2. Umgekehrt können thermisch günstige Einstellungen für die dynamoelektrische Maschine 2 den Umrichter thermisch stärker belasten. Je nachdem welches dieser Teilsysteme des Antriebs 1 noch thermische Reserven aufweist, kann über die Regeleinheit 27 der Umrichter dementsprechend eingestellt werden. Zusätzlich kann die Regeleinheit 27 auch in die Kühlung eingreifen, indem beispielsweise ein oder mehrere Fremdlüfter des Antriebs 1 zu- oder abgeschaltet werden oder mit dementsprechender Drehzahl betrieben werden.

## Patentansprüche

1. Antrieb (1) mit
- zumindest einer dynamoelektrischen rotatorischen Maschine (2),
- zumindest einem elektronischen Anbauteil (13),
- zumindest einer Kühleinheit (15),
- wobei diese Komponenten des Antriebs (1) axial hintereinander angeordnet sind, derart, dass das elektronische Anbauteil (13) axial zwischen dynamoelektrischen rotatorischen Maschine (2) und der Kühleinheit (15) angeordnet ist
- wobei das elektronische Anbauteil (13) zumindest abschnittsweise von einer thermisch leitfähigen Abdeckung (20) umgeben ist.

2. Antrieb (1) nach Anspruch 1, **dadurch gekennzeichnet, dass** das elektronische Anbauteil (13) Steller- oder Umrichterkomponenten aufweist, die in thermisch direkt leitfähigem Kontakt mit der Abdeckung (20) stehen.

3. Antrieb (1) nach einem der vorhergehenden Ansprüche, **dadurch gekennzeichnet, dass** die Abdeckung (20) abschnittsweise Kühlrippen aufweist.

4. Antrieb (1) nach Anspruch 3, **dadurch gekennzeichnet, dass** insbesondere an der radial äußeren Begrenzung der Abdeckung (20) im Wesentlichen axial verlaufende Kühlrippen vorgesehen sind.

5. Antrieb (1) nach einem der vorhergehenden Ansprüche, **dadurch gekennzeichnet, dass** die Abdeckung (20) auf der der Kühleinheit (15) zugewandten Seite des elektronischen Anbauteils (13)angeordnet ist.

6. Antrieb (1) nach einem der vorhergehenden Ansprüche, **dadurch gekennzeichnet, dass** die dynamoelektrische rotatorische Maschine (2) in einem Gehäuse (10) eingeschlossen ist, das insbesondere axial verlaufende Kühlrippen aufweist.

7. Antrieb (1) nach Anspruch 6, **dadurch gekennzeichnet, dass** die Kühlrippen der Abdeckung (20) und die Kühlrippen des Gehäuses (10) axial fluchten.

8. Antrieb (1) nach Anspruch 6, **dadurch gekennzeichnet, dass** die Kühleinheit (15) als Lüftereinheit ausgebildet ist, die zumindest abschnittsweise über die Abdeckung (20) und die dynamoelektrische rotatorische Maschine (2) einen Kühlluftstrom im Betrieb der dynamoelektrischen rotatorischen Maschine (2) generiert.

9. Antrieb (1) nach Anspruch 8, **dadurch gekennzeichnet, dass** eine Lüfterhaube als Leitvorrichtung des Kühlluftstroms dient, die bis ca. 30% über die axiale Länge des Gehäuses (10) der dynamoelektrischen rotatorischen Maschine (2) ausgehend von der BS-Seite reicht.

10. Antrieb (1) nach einem der vorhergehenden Ansprüche, **dadurch gekennzeichnet, dass** die Abdeckung (20) und das elektronische Anbauteil (13)im Bereich der Welle eine Aussparung aufweist, um eine Eigenbelüftung des Antriebs (1) zu ermöglichen.
